Europäisches Patentamt

European Patent Office

Office européen des brevets

(19)

(11) Veröffentlichungsnummer : **0 033 109**
**B1**

(12) **EUROPÄISCHE PATENTSCHRIFT**

(45) Veröffentlichungstag der Patentschrift :
20.04.83

(51) Int. Cl.³ : **C 01 B 33/32**

(21) Anmeldenummer : **81100352.4**

(22) Anmeldetag : **19.01.81**

(54) **Verfahren zur hydrothermalen Herstellung von Natriumsilikatlösungen in einem statischen Reaktionsbehälter.**

(30) Priorität : **26.01.80 DE 3002834**

(43) Veröffentlichungstag der Anmeldung :
**05.08.81 Patentblatt 81/31**

(45) Bekanntmachung des Hinweises auf die Patenterteilung : **20.04.83 Patentblatt 83/16**

(84) Benannte Vertragsstaaten :
**AT BE CH DE FR GB IT LI NL SE**

(56) Entgegenhaltungen :
**EP A 0 006 202**
**DE A 2 118 661**
**US A 2 251 515**
**US A 3 884 645**

(73) Patentinhaber : **Henkel Kommanditgesellschaft auf Aktien**
**Postfach 1100 Henkelstrasse 67**
**D-4000 Düsseldorf 1 (DE)**

(72) Erfinder : **Krings, Heinrich**
**Adolf-Menzel-Strasse 8**
**D-4006 Erkrath (DE)**
Erfinder : **Novotny, Rudolf, Dr.**
**Am Rittersberg 14**
**D-4000 Düsseldorf 13 (DE)**
Erfinder : **v. Laufenberg, Jürgen, Dr.**
**Scheidemann Strasse 5**
**D-5657 Haan 1 (DE)**

« Verfahren zur hydrothermalen Herstellung von Natriumsilikatlösungen in einem statischen Reaktionsbehälter »

Die Erfindung betrifft ein verbessertes Verfahren zur hydrothermalen Herstellung von Natriumsilikatlösungen unter Druck und bei erhöhten Temperaturen in einem statischen Reaktionsbehälter sowie nachfolgender Filtration.

Von den unter dem Namen Wasserglas bekannten Alkalimetallsilikatlösungen finden für technische Zwecke am häufigsten Natriumsilikatlösungen — gemeinhin als Natronwasserglas bezeichnet - Verwendung. Derartige Natronwassergläser weisen üblicherweise einen Feststoffgehalt von etwa 35 Gewichtsprozent sowie ein Gewichtsverhältnis $SiO_2 : Na_2O$ von 3,3 bis 3,4 : 1 auf. Die Herstellung solcher Natronwassergläser im technischen Maßstab erfolgt im allgemeinen durch Zusammenschmelzen von Quarzsand und Soda in hierfür geeigneten Öfen bei Temperaturen im Bereich von 1 400 bis 1 500 °C, wobei die Kieselsäure das $CO_2$ austreibt. Die beim Abkühlen erstarrende Schmelze — das sogenannte Stückenglas — wird anschließend in einem weiteren Verfahrensschritt unter Anwendung von Druck und erhöhten Temperaturen in Wasser gelöst und die erhaltene Lösung — je nach Qualitätsanforderungen — gegebenenfalls filtriert. Durch Vermischen solcher Lösungen mit Natronlauge lassen sich Natriumsilikatlösungen mit einem geringeren $SiO_2/Na_2O$-Gewichtsverhältnis gewinnen. Dieses Verfahren ist sowohl apparativ als auch hinsichtlich der erforderlichen Energiemengen sehr aufwendig und bedingt mithin relativ hohe Energie- und Anlagenkosten.

Eine weitere Möglichkeit zur Herstellung von Natronwassergläsern besteht in einem hydrothermalen Aufschluß von Sand mit Hilfe wäßriger Natronlauge, gleichfalls unter Anwendung von Druck und erhöhten Temperaturen. Nach diesem Verfahren lassen sich jedoch nur Natriumsilikatlösungen mit einem Gewichtsverhältnis $SiO_2 : Na_2O$ von bis zu 2,8 : 1 gewinnen. Gebräuchliche Reaktionsbehälter für eine solche Hydrothermalsynthese sind zylindrische, mit einer Nickelauskleidung versehene Eisenautoklaven, die im Hinblick auf eine ausreichende Durchmischung der Sand/Natronlauge-Suspension entweder um ihre horizontale Achse drehbar gelagert oder aber mit entsprechenden Rührwerken versehen sind. Als nachteilig erweist sich jedoch bei diesem Verfahren, daß bis zu einer vollständigen Umsetzung des eingesetzten Sandes — bei technisch sinnvollen, das heißt nicht zu hohen Temperaturen — sehr lange Reaktionszeiten in Kauf genommen werden müssen. Bei einer nur teilweisen Umsetzung des eingesetzten Sandes ergeben sich jedoch Probleme hinsichtlich der dann zur Abtrennung und Reinigung der gebildeten Natriumsilikatlösung erforderlichen Filtration, die bislang noch nicht zufriedenstellend gelöst werden konnten. Üblicherweise erfolgt die Filtration derartiger Wasserglaslösungen mit Hilfe von Anschwemmfiltern unter Druck sowie unter Verwendung von Filterhilfsmitteln. Dieses herkömmliche Filtrierverfahren weist jedoch einige wesentliche Nachteile auf, beispielsweise den Anfall hochalkalischer Filterrückstände, die nur als umweltbelastende Abfallprodukte in Deponien gelagert werden können, die erforderliche Verwendung zusätzlicher Filterhilfsmittel, wie Kieselgur oder aufgearbeitetes Perlitgestein, Verluste an Natronwasserglas, das im Filterschlamm verbleibt, sowie die unerläßliche Aufbereitung der alkalischen Waschwässer. Die Anwendung höherer Temperaturen bei einem solchen Hydrothermalverfahren führt zwar einerseits zu verbesserten Raum/Zeit-Ausbeuten, bedingt jedoch andererseits einen weitaus höheren Energiebedarf.

Die Aufgabe der vorliegenden Erfindung ist es daher, ein Hydrothermalverfahren zur Herstellung von Natronwasserglas zu entwickeln, bei dem die vorstehend aufgezeigten Nachteile vermieden werden. Insbesondere betrifft diese Aufgabenstellung die Erzielung einer möglichst hohen Raum/Zeit-Ausbeute bei Anwendung vergleichsweise niedriger Temperaturen und somit einem möglichst geringen Energieaufwand.

Gegenstand der Erfindung ist somit ein Verfahren zur hydrothermalen Herstellung von Natriumsilikatlösungen mit einem Gewichtsverhältnis $SiO_2 : Na_2O$ von 1 bis 2,8 : 1 durch Umsetzung von Sand mit wäßriger Natriumhydroxidlösung unter Druck und bei erhöhten Temperaturen sowie nachfolgender Filtration, welches dadurch gekennzeichnet ist, daß man die flüssige Phase des Reaktionsgemisches bei Temperaturen im Bereich von 150 bis 250 °C und den diesen Temperaturen entsprechenden Drücken von gesättigtem Wasserdampf solange im Kreislauf durch ein in einem statischen Reaktionsbehälter eingebrachtes Sandbett unter Ausbildung einer Wirbelschicht sowie durch eine außerhalb des Behälters angeordnete Umgehungsleitung pumpt, bis die $SiO_2$-Konzentration in der flüssigen Phase einen Wert erreicht hat, der dem vorstehend genannten Bereich entspricht.

Überraschenderweise wurde nämlich gefunden, daß sich im Rahmen einer Hydrothermalsynthese unter den vorstehend angegebenen Bedingungen die erforderlichen Reaktionszeiten zur Herstellung von Natronwasserglas erheblich verkürzen lassen, wobei gleichzeitig geringere Reaktionstemperaturen und — in Verbindung damit — ein geringerer Energiebedarf erforderlich sind. Trotz dieser verkürzten Reaktionszeiten läßt sich bei Anwendung des erfindungsgemäßen Verfahrens ein beträchtlicher Umsetzungsgrad der eingesetzten Reaktionskomponenten erzielen, der in einer relativ hohen $SiO_2$-Konzentration der gewonnenen Natriumsilikatlösungen zum Ausdruck kommt. Auf diese Weise ermöglicht es das erfindungsgemäße Verfahren insbesondere Natronwasserglaslösungen mit einem $SiO_2/Na_2O$-Gewichtsverhältnis im Bereich von 1 bis 2 : 1, wie sie in wachsendem Umfange zur Gewinnung von Metasilikaten beziehungsweise Dihydrogenorthosilikathydraten Bedeutung erlangen, in guten Ausbeuten herzustellen. Die vorstehend aufgezeigten Nachteile der herkömmlichen Verfahrensweise werden erfindungsgemäß durch die Anwendung der spezifischen Verfahrensmerkmale überwunden.

Hierbei handelt es sich im wesentlichen um die Ausbildung einer Wirbelschicht des Reaktionsgemisches in der eigentlichen Reaktionszone, in der auf diese Weise ein permanenter und intensiver Stoffaustausch zwischen den Reaktionskomponenten Sand und Natronlauge einerseits und der gebildeten Natriumsilikatlösung andererseits stattfindet. Im Vergleich zu den konventionellen Hydrothermalverfahren des Standes der Technik bedingt die Ausbildung dieser Wirbelschicht somit — bei sonst gleichen Reaktionsbedingungen und bezogen auf die gleiche Menge eingesetzten Sandes — sowohl eine beträchtliche Verkürzung der Reaktionszeit als auch eine hohe $SiO_2$-Konzentration der gebildeten Natriumsilikatlösung.

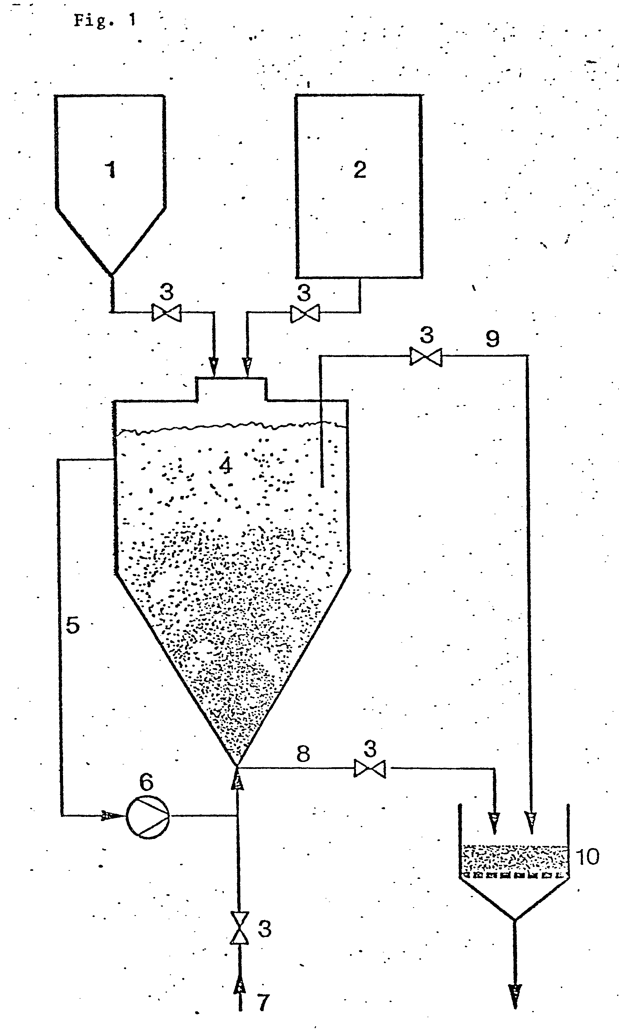

Abbildung 1 zeigt ein beispielhaftes Fließschema für die Ausführung des erfindungsgemäßen Verfahrens. Die hierin angegebenen Ziffern haben die nachstehende Bedeutung :

1) Vorratsbehälter für den Sand
2) Vorratsbehälter für die wäßrige Natronlauge
3) Dosierventile
4) Reaktionsbehälter
5) Umgehungsleitung
6) Pumpe
7) Zufuhr für gesättigten Wasserdampf
8) Rohrleitung zum Entleeren des Reaktionsbehälters
9) Rohrleitung zum Entleeren des Reaktionsbehälters
10) Sandbettfilter

Zur Durchführung des erfindungsgemäßen Verfahrens werden Sand und wäßrige Natriumhydroxidlösung, das heißt Natronlauge, in der Regel chargenweise aus den Vorratsbehältern 1 und 2 über geeignete Dosierventile 3 in das als Reaktor dienende statische Druckgefäß 4 eingebracht, wobei sich der Sand primär in dem unteren — zweckmäßigerweise konisch ausgebildeten — Teil des Reaktionsbehälters in Form eines Sandbettes absetzt. Zur Ausbildung der erfindungswesentlichen Wirbelschicht wird nun dieses Sandbett durch ein stetiges Umpumpen der flüssigen Phase des Reaktionsgemisches nach Art eines Wirbelschichtprozesses in Bewegung gebracht und gehalten. Hierbei wird die flüssige Phase im oberen Teil aus dem Reaktionsbehälter abgezogen und durch eine außerhalb des Behälters angeordnete Umgehungsleitung 5 sowie eine zweckentsprechende Pumpe 6 am unteren Ende des Behälters wieder in diesen eingeführt, so daß dieser Flüssigkeitsstrom stets unter Druck von unten her in das Sandbett — beziehungsweise in die bereits ausgebildete Wirbelschicht — einströmt. Im Sinne der Erfindung ist unter « flüssiger Phase des Reaktionsgemisches » im wesentlichen sowohl die eingesetzte wäßrige Natronlauge als auch die im Verlaufe der Umsetzung gebildete Natriumsilikatlösung zu verstehen, die ferner jedoch auch Anteile des aufgewirbelten Sandes enthalten kann.

Als besonders vorteilhaft hat es sich für das erfindungsgemäße Verfahren erwiesen, die Reaktionskomponenten Sand und Natronlauge nicht in einem stöchiometrischen Verhältnis zueinander zur Reaktion zu bringen, sondern die wäßrige Natriumhydroxidlösung zusammen mit einem erheblichen Überschuß an Sand umzusetzen. Dementsprechend ist es erfindungsgemäß bevorzugt, daß man wäßrige Natriumhydroxidlösung einer Konzentration von 10 bis 50 Gewichtsprozent, vorzugsweise 20 bis 30 Gewichtsprozent, durch ein Sandbett pumpt, das einen Überschuß an Sand von bis zu 500 %, vorzugsweise 100 bis 200 %, bezogen auf die Molverhältnisse von $SiO_2$ und $Na_2O$ im Ansatz, aufweist. Im Rahmen des erfindungsgemäßen Verfahrens trägt neben der Wirkung der vorstehend erörterten Wirbelschicht auch dieser Sandüberschuß zu einer beträchtlichen Verkürzung der erforderlichen Reaktionszeiten — selbst bei Anwendung relativ niederer Reaktionstemperaturen — bei. Die genannten Natronlaugekonzentrationen, insbesondere die bevorzugten, haben sich im Hinblick auf die Erzielung der erwünschten $SiO_2$-Konzentrationen im gebildeten Natronwasserglas als besonders vorteilhaft erwiesen.

Das Aufheizen des Reaktionsgemisches auf die erforderliche Reaktionstemperatur erfolgt zweckmäßigerweise durch direktes Einleiten von gesättigtem Wasserdampf in den Reaktionsbehälter, wobei man den Wasserdampf mit Vorteil gleichfalls am unteren Ende des Behälters in diesen einführt — 7 —, um auf diese Weise ein Aufwirbeln des Sandbettes im Sinne einer Ausbildung der erfindungswesentlichen Wirbelschicht zu untersützen. Gegebenenfalls kann das Reaktionsgemisch noch zusätzlich indirekt durch geeignete Heizelemente im Reaktionsbehälter oder eine Mantelbeheizung desselben aufgeheizt werden. Auch die Umgehungsleitung 5 kann gewünschtenfalls mit einem entsprechenden Heizmantel ausgestattet sein. Vorzugsweise wird jedoch dem Reaktionsgemisch gesättigter Wasserdampf bis zum Erreichen der erwünschten Reaktionstemperatur zugeführt, wobei sich gleichzeitig der dieser Temperatur entsprechende Druck des gesättigten Wasserdampfes im Reaktionsbehälter einstellt. Die nachstehende Tabelle zeigt hierzu beispielhaft einige Vergleichswerte zwischen Temperatur und Druck von gesättigtem Wasserdampf :

(Voir tableau, page 4)

| | Temperatur (°C) | Druck (bar) |
|---|---|---|
| | 150 | 3,8 |
| | 160 | 5,3 |
| | 170 | 7,0 |
| | 180 | 9,3 |
| | 190 | 12,0 |
| | 200 | 15,0 |
| | 225 | 25,0 |

Im Sinne der Erfindung ist es ferner bevorzugt, daß man die Umsetzung bei Temperaturen im Bereich von 170 bis 200 °C und den diesen Temperaturen entsprechenden Drücken von gesättigtem Wasserdampf durchführt. Die Wahl einer relativ niederen Reaktionstemperatur in diesem bevorzugten Temperaturbereich ermöglicht — in Verbindung mit den erfindungsgemäß erzielbaren kurzen Reaktionszeiten — die Durchführung der Hydrothermalsynthese mit einem möglichst geringen Energieaufwand.

Nach Erreichen der erwünschten Reaktionstemperatur wird das Reaktionsgemisch — unter stetigem Umpumpen der flüssigen Phase im Kreislauf — solange unter den eingestellten Temperatur/Druck-Bedingungen in dem statischen Druckgefäß belassen, bis eine Probe der gebildeten Natronwasserglaslösung das Erreichen des erwünschten $SiO_2/Na_2O$-Gewichtsverhältnisses beziehungsweise der erwünschten $SiO_2$-Konzentration anzeigt. Die hierfür jeweils erforderlichen Reaktionszeiten lassen sich im allgemeinen im Verlauf einiger weniger Reaktionsabläufe empirisch ermitteln.

Nach beendeter Reaktion wird anschließend die gebildete — noch unter Druck stehende oder auf Normaldruck entspannte — Natriumsilikatlösung durch die Leitungen 8 oder 9 auf ein Sandbettfilter 10 im Rahmen gebräuchlicher Filteraggregate übergeführt. Als Filtermedium für dieses Sandbettfilter wird im Sinne der Erfindung vorzugsweise der bereits zur Umsetzung verwendete, überschüssige Sand des Sandbettes aus der beendeten Hydrothermalsynthese — gegebenenfalls im Gemisch mit überschüssigem Sand aus einer der vorangegangenen chargenweisen Umsetzungen oder frischem Sand — eingesetzt. Zur Bereitung des Sandbettfilters wird zuerst der sich im unteren Teil des Reaktionsbehälters absetzende überschüssige Sand — zweckmäßigerweise durch Leitung 8 — auf das Filterbett übertragen. Gegebenenfalls noch im Reaktionsbehälter verbliebener Sand kann für die nachfolgende Umsetzung in diesem belassen oder aber zur Bereitung des Sandbettfilters für eine der nachfolgenden Chargen verwendet werden.

Das Sandbett wird mit Vorteil vor dem Aufbringen der zu filtrierenden Natriumsilikatlösung durch eine von unten anströmende, im Kreislauf geführte geringe Menge an Flüssigkeit — beispielsweise Wasser oder gegebenenfalls Natriumsilikatlösung — in einer Weise aufbereitet, daß die Feinanteile des eingesetzten Sandes an die Oberfläche des Filterbettes geschwemmt werden und somit eine hinreichend wirksame Filterschicht ausbilden.

Erfindungsgemäß ist es ferner bevorzugt, den zur Filtration verwendeten Sand des Filterbettes anschließend in das Verfahren zurückzuführen und so — einschließlich der diesem Sand anhaftenden Natriumsilikatlösung — für die nachfolgende Umsetzung erneut einzusetzen. Dementsprechend hat es sich bei der Durchführung der Filtration als besonders vorteilhaft erwiesen, die noch heiße, unter Druck stehende Natronwasserglaslösung auf das Sandbettfilter aufzugeben, da hierbei der Sand für die nachfolgende Umsetzung bereits vorgeheizt und der Wärmegehalt der heißen Wasserglaslösung in energiesparenderweise optimal genutzt wird. Auf diese Weise können einerseits die nach den gebräuchlichen Verfahren unumgängliche Beseitigung des Filtermaterials entfallen sowie andererseits beträchtliche Energiemengen im Rahmen der gesamten Verfahrensführung eingespart werden.

Nach einer besonderen Ausführungsform des erfindungsgemäßen Verfahrens wird die hydrothermale Umsetzung kontinuierlich durchgeführt, wobei man die gebildete Natriumsilikatlösung kontinuierlich aus dem Reaktionsbehälter ausführt und die Reaktionskomponenten gleichfalls kontinuierlich in denselben nachdosiert. Das Einführen von Sand und Natronlauge in den statischen Reaktionsbehälter erfolgt hierbei zweckmäßigerweise unter Verwendung entsprechender Druckpumpen ; der Sand wird vorzugsweise durch ein im Behälter angeordnetes Tauchrohr direkt in den unteren Teil desselben eingeleitet. Die Einhaltung der erwünschten Reaktionstemperatur sowie des Druckes wird durch eine entsprechend gesteuerte — gegebenenfalls kontinuierliche — Zufuhr von gesättigtem Wasserdampf gewährleistet. Nach einer gewissen Anlaufzeit der hydrothermalen Umsetzung, die sich mit Hilfe von Proben der gebildeten Natriumsilikatlösung hinsichtlich deren $SiO_2$-Konzentration ermitteln läßt, wird die gewonnene Natronwasserglaslösung — vorzugsweise über die Leitung 9 — kontinuierlich aus dem Reaktionsbehälter abgezogen und auf das Sandbettfilter übergeführt.

In den nachfolgenden Beispielen, die — soweit nicht anders vermerkt — in der vorstehend beschriebenen Weise durchgeführt wurden, wird die Auswirkung des erfindungsgemäßen Verfahrens hinsichtlich Reaktionsdauer und erforderlichen Reaktionstemperaturen anhand von Daten aufgezeigt.

Vergleichsbeispiel 1

Die nachstehenden Vergleichsbeispiele wurden in der herkömmlichen Art und Weise eines hydrothermalen Aufschlusses von Sand mit wäßriger Natronlauge durchgeführt und die gebildete Natriumsilikatlösung anschließend nach dem üblichen Filtrierverfahren behandelt. Als Reaktionsgefäß wurde ein waagerecht angeordneter zylindrischer Druckbehälter mit einem Leervolumen·von 340 cm³ verwendet, der um seine horizontale Achse drehbar gelagert war. Die Beheizung desselben erfolgte indirekt mit Hilfe eines Glycerinbades.

| | |
|---|---|
| Füllmenge, insgesamt | 170 g |
|    Sand | 62,1 g |
|    Natronlauge (50 Gew.-%ig) | 78,7 g |
|    Wasser | 29,2 g |
| Laugenkonzentration : | 36,5 Gew.- % |
| Reaktionstemperatur : | 170 °C |

Ergebnis :

| Reaktionszeit (Stunden) | gelöster Sand (%) | $SiO_2/Na_2O$-Verhältnis der Natriumsilikatlösung |
|---|---|---|
| nach 3 | 73,1 % | 1,49 : 1 |
| nach 4 | 80,4 % | 1,63 : 1 |
| nach 8 | 89,5 % | 1,82 : 1 |

Dieses Beispiel zeigt, daß bei Anwendung einer relativ niederen Reaktionstemperatur sehr lange Reaktionszeiten zur Umsetzung des eingesetzten Sandes erforderlich sind, wobei der Anteil des nicht umgesetzten Sandes bei dem herkömmlichen Filtrationsverfahren die vorstehend erläuterten Nachteile bedingt.

Vergleichsbeispiel 2

Dieses Beispiel wurde den in Vergleichsbeispiel 1 angegebenen Bedingungen — jedoch bei höheren, unterschiedlichen Reaktionstemperaturen — durchgeführt. Es resultierten die folgenden Ergebnisse :

a) Reaktionstemperatur : 200 °C

| Reaktionszeit (Stunden) | gelöster Sand (%) | $SiO_2/Na_2O$-Verhältnis der Natriumsilikatlösung |
|---|---|---|
| nach 3 | 98,9 % | 2,01 : 1 |
| nach 4 | 99,5 % | 2,02 : 1 |
| nach 8 | 100 % | 2,03 : 1 |

b) Reaktionstemperatur : 225 °C

| Reaktionszeit (Stunden) | gelöster Sand (%) | $SiO_2/Na_2O$-Verhältnis der Natriumsilikatlösung |
|---|---|---|
| nach 3 | 99,9 % | 2,01 : 1 |
| nach 4 | 100 % | 2,02 : 1 |
| nach 8 | 100 % | 2,03 : 1 |

Die vorstehenden Ergebnisse zeigen, daß die hydrothermale Herstellung von Natronwasserglas gemäß dem Stand der Technik erst bei einer beträchtlichen Steigerung der Reaktionstemperaturen zu einer vollständigen Umsetzung des eingesetzten Sandes in technisch vertretbaren Reaktionszeiten führt.

## Beispiel 1

Die Durchführung dieses erfindungsgemäßen Beispiels erfolgte — wie vorstehend näher erläutert — in einem zylinderförmigen, vertikal angeordneten statischen Druckgefäß mit einem Leervolumen von 3,6 m³, das in seinem unteren Teil konisch ausgebildet und mit einer der vorstehenden Beschreibung entsprechenden Umgehungsleitung ausgestattet war. Die Beheizung erfolgte durch direktes Einleiten von gesättigtem Wasserdampf am unteren Ende des Druckbehälters.

| | |
|---|---|
| Füllmenge, insgesamt | 4,8 t |
| Sand | 2,4 t |
| Natronlauge (50 Gew.-%ig) | 1,4 t |
| Wasser | 1,0 t |
| Laugenkonzentration : | 24 Gew.-% |
| Sandüberschuß : | 185 % |
| Reaktionstemperatur : | 170 °C |
| Reaktionsdauer | 60 Minuten |

Die nach der angegebenen Reaktionsdauer gebildete Natriumsilikatlösung wurde über ein Sandbettfilter unter Verwendung des nicht umgestzten Sandüberschusses filtriert.

Ergebnis :

Es resultierte eine Natriumsilikatlösung mit einem Gewichtsverhältnis $SiO_2/Na_2O$ von 1,53 : 1 und einer $SiO_2$-Konzentration von 21,1 Gewichtsprozent. Somit wurde bereits nach einer Reaktionsdauer von nur einer Stunde eine Natriumsilikatlösung erhalten, die sich — bei gleicher Reaktionstemperatur, jedoch höherer Laugenkonzentration — gemäß Vergleichsbeispiel 1 erst nach drei bis vier Stunden bildet.

## Beispiel 2

Die Durchführung dieses Beispiels erfolgte analog Beispiel 1.

| | |
|---|---|
| Füllmenge, insgesamt | 4,9 t |
| Sand | 2,2 t |
| Natronlauge (50 Gew.-%ig) | 1,3 t |
| Wasser | 1,4 t |
| Laugenkonzentration : | 25 Gew.-% |
| Sandüberschuß | 185 % |
| Reaktionstemperatur : | 180 °C |
| Reaktionsdauer : | 30 Minuten |

Die nach der angegebenen Reaktionsdauer gebildete Natriumsilikatlösung wurde gleichfalls über ein Sandbettfilter unter Verwendung des nicht umgesetzten Sandüberschusses filtriert.

Ergebnis :

Es resultierte eine Natriumsilikatlösung mit einem Gewichtsverhältnis $SiO_2/Na_2O$ von 1,52 : 1 und einer $SiO_2$-Konzentration von 20,1 Gewichtsprozent.

Wie auch dieses Beispiel zeigt, läßt sich das erfindungsgemäße Verfahren mit Vorteil zur hydrothermalen Herstellung von Natronwasserglas einsetzen, wobei unter Anwendung relativ niederer Reaktionstemperaturen in vergleichsweise kurzen Reaktionszeiten Natriumsilikatlösungen gebildet werden, die einerseits aufgrund des erzielten Umsetzungsgrades der eingesetzten Rohstoffe eine hohe $SiO_2$-Konzentration aufweisen und die sich andererseits mit Hilfe des erfindungsgemäß verwendeten Sandbettfilters problemlos reinigen lassen.

### Ansprüche

1. Verfahren zur hydrothermalen Herstellung von Natriumsilikatlösungen mit einem Gewichtsverhältnis $SiO_2 : Na_2O$ von 1 bis 2,8 : 1 durch Umsetzung von Sand mit wäßriger Natriumhydroxidlösung unter Druck und bei erhöhten Temperaturen sowie nachfolgender Filtration, dadurch gekennzeichnet, daß man die flüssige Phase des Reaktionsgemisches bei Temperaturen im Bereich von 150 und 250 °C und den diesen Temperaturen entsprechenden Drücken von gesättigtem Wasserdampf solange im Kreislauf durch ein in einen statischen Reaktionsbehälter eingebrachtes Sandbett unter Ausbildung einer Wirbelschicht sowie durch eine außerhalb des Behälters angeordnete Umgehungsleitung pumpt, bis die $SiO_2$-Konzentration in der flüssigen Phase einen Wert erreicht hat, der dem vorstehend genannten Bereich entspricht.

2. Verfahren nach Anspruch 1, dadurch gekennzeichnet, daß man wäßrige Natriumhydroxidlösung einer Konzentration von 10 bis 50 Gew.-%, vorzugsweise 20 bis 30 Gew.-%, durch ein Sandbett pumpt, das einen Überschuß an Sand von bis zu 500 %, vorzugsweise 100 bis 200 %, bezogen auf die Molverhältnisse von $SiO_2$ und $Na_2O$ im Ansatz, aufweist.

3. Verfahren nach Anspruch 1 und 2, dadurch gekennzeichnet, daß man die Umsetzung bei Temperaturen im Bereich von 170 bis 200 °C und den diesen Temperaturen entsprechenden Drücken von gesättigtem Wasserdampf durchführt.

4. Verfahren nach Anspruch 1 bis 3, dadurch gekennzeichnet, daß man das noch überschüssigen Sand enthaltene Sandbett als Filtermedium für die gebildete Natriumsilikatlösung verwendet.

5. Verfahren nach Anspruch 1 bis 4, dadurch gekennzeichnet, daß man die Umsetzung kontinuierlich durchführt, wobei die gebildete Natriumsilikatlösung kontinuierlich aus dem Reaktionsbehälter ausgeführt und die Reaktionskomponenten gleichfalls kontinuierlich in denselben nachdosiert werden.

## Claims

1. A process for the hydrothermal production of sodium silicate solutions having a ratio by weight of $SiO_2$ to $Na_2O$ of from 1 to 2.8 : 1 by reacting sand with aqueous sodium hydroxide solution under pressure at elevated temperature, followed by filtration, characterised in that the liquid phase of the reaction mixture is pump-circulated at temperatures in the range from 150 to 250 °C and under the saturated steam pressures corresponding to those temperatures through a bed of sand introduced into a static reaction vessel, resulting in the formation of a fluidized bed, and through a bypass pipe arranged outside the vessel until the concentration of $SiO_2$ in the liquid phase has reached a value corresponding to the above-mentioned range.

2. A process as claimed in Claim 1, characterised in that aqueous sodium hydroxide solution having a concentration of from 10 to 50 % by weight and preferably from 20 to 30 % by weight is pumped through a bed of sand containing an excess of sand of up to 500 % and preferably from 100 to 200 %, based on the molar ratios of $SiO_2$ and $Na_2O$ in the mixture.

3. A process as claimed in Claims 1 and 2, characterised in that the reaction is carried out at temperatures in the range from 170 to 200 °C and under saturated steam pressures corresponding to those temperatures.

4. A process as claimed in Claims 1 to 3, characterized in that the bed of sand still containing excess sand is used as filter medium for the sodium silicate solution formed.

5. A process as claimed in Claims 1 to 4, characterized in that the reaction is carried out continuously, the sodium silicate solution formed being continuously run off from the reaction vessel and the reaction components being introduced, likewise continuously, into the reaction vessel.

## Revendications

1. Procédé de fabrication hydrothermale de solutions de silicate de sodium ayant un rapport pondéral $SiO_2$ : $Na_2O$ de 1 à 2,8 : 1, par réaction d'un sable avec une solution aqueuse d'hydroxyde de sodium sous pression et à des températures élevées et par filtration consécutive, caractérisé en ce qu'on recycle par pompage la phase liquide du mélange de réaction à des températures dans l'intervalle de 150 à 250 °C, et aux pressions de vapeur d'eau saturée correspondant à ces températures, à travers un lit de sable introduit dans un récipient de réaction statique avec constitution d'une couche fluidisée, de même qu'à travers une conduite de dérivation installée à l'extérieur du récipient, jusqu'à ce que la concentration en $SiO_2$ dans la phase liquide atteigne une valeur qui corresponde à l'intervalle mentionné ci-dessus.

2. Procédé selon la revendication 1, caractérisé en ce qu'on pompe une solution aqueuse d'hydroxyde de sodium à une concentration de 10 à 50 % en poids, de préférence de 20 à 30 % en poids, à travers un lit de sable qui présente un excès de sable allant jusqu'à 500 %, de préférence de 100 à 200 % par rapport aux proportions molaires de $SiO_2$ et de $Na_2O$ dans la charge.

3. Procédé selon les revendications 1 et 2, caractérisé en ce qu'on exécute la réaction à des températures dans l'intervalle de 170 à 200 °C et aux pressions de vapeur saturée correspondant à ces températures.

4. Procédé selon les revendications 1 à 3, caractérisé en ce qu'on utilise le lit de sable contenant encore du sable en excès comme milieu de filtration pour la solution de silicate de sodium formée.

5. Procédé selon les revendications 1 à 4, caractérisé en ce qu'on exécute la réaction en continu, la solution de silicate de sodium formée étant continuellement éliminée du récipient de réaction et les composants réactionnels étant par la suite de même introduits continuellement dans celui-ci.

Fig. 1